# EUROPÄISCHE PATENTANMELDUNG

(11) **EP 2 065 235 A1**
(43) Veröffentlichungstag der Anmeldung: **03.06.2009**
(21) Anmeldenummer: 08020379.7
(22) Anmeldetag: 24.11.2008
(51) Int. Cl.: B60J 1/20, B60J 3/02, E06B 9/40, E06B 9/42, E06B 9/68, E04F 10/06

(54) **Stufenlos verstellbares Fahrzeugrollo**

(30) Priorität: 30.11.2007 DE 102007058830
(71) Anmelder: BOS GmbH & Co. KG, 73760 Ostfildern (DE)
(72) Erfinder: Lekar, Jan, 73262 Reichenbach (DE)
(74) Vertreter: Patentanwälte Ruff, Wilhelm, Beier, Dauster & Partner

(57) **Zusammenfassung**

Die Erfindung betrifft ein Fahrzeugrollo, insbesondere zur Abdeckung einer Fahrzeugfensteröffnung (11), umfassend eine erste Wickelwelle (20), eine auf der ersten Wickelwelle (20) auf- und abwickelbar angebrachte Rollobahn (21), ein am freien Ende der Rollobahn (21) angreifendes flexibles Kraftübertragungsmittel (4), das gegensinnig zur Auf- bzw. Abwickelrichtung der Rollobahn (20) von einer zweiten Wickelwelle (5) abgewickelt bzw. auf diese aufgewickelt wird, wobei die zweite Wickelwelle (5) zumindest abschnittsweise konisch gestaltet ist, die zweite Wickelwelle (5) verschieblich gelagert ist und die zweite Wickelwelle (5) bei einer Rotation um ihre Drehachse (A) in Axialrichtung der Drehachse (A) verschiebbar ist, so dass ein Wickeldurchmesser des Kraftübertragungsmittels (4) an der zweiten Wickelwelle (5) beim Abwickeln der Rollobahn (21) von der ersten Wickelwelle (20) abnimmt.

## Beschreibung

Die Erfindung betrifft ein stufenlos verstellbares Fahrzeugrollo, insbesondere zur Abdeckung einer Fahrzeugfensteröffnung, umfassend eine erste Wickelwelle, eine auf der ersten Wickelwelle auf- und abwickelbar angebrachte Rollobahn, ein an einem freien Ende der Rollobahn angreifendes flexibles Kraftübertragungsmittel, das gegensinnig zur Auf- bzw. Abwickelrichtung der Rollobahn von einer zweiten Wickelwelle abgewickelt bzw. auf diese aufgewickelt wird.

Unter einer gegensinnigen Wicklung wird dabei verstanden, dass beim Abwickeln der Rollobahn von der ersten Wickelwelle das Kraftübertragungsmittel auf die zweite Wickelwelle aufgewickelt wird, und beim Aufwickeln der Rollobahn auf die erste Wickelwelle das Kraftübertragungsmittel von der zweiten Wickelwelle abgewickelt wird.

Aus der DE 20 2007 008 186 U1 ist ein Sonnenschutzrollo für Kraftfahrzeuge mit einer Antriebsvorrichtung bekannt, wobei die Antriebsvorrichtung einen Federmotor umfasst, welcher mindestens ein Federelement aufweist, eine Rollobahn entgegen einer Rückstellkraft des Federelements von einer Wickelwelle abziehbar ist und durch die Rückstellkraft des Federelements auf die Wickelwelle aufwickelbar ist, der Federmotor eine relativ zu der Wickelwelle verdrehbar gelagerte Welle aufweist, das Federelement zwischen der Welle und der Wickelwelle angeordnet ist und eine Drehbewegung der Welle mit einer Verschiebung eines Auszugsprofils beim Abziehen und/oder Aufwickeln der Rollobahn synchronisiert ist. Durch ein synchronisiertes Mitdrehen der Welle ist es möglich, ein Federelement mit einer geringeren Rückstellkraft vorzusehen, als bei einem entsprechend dimensionierten Rollo mit einer unbewegten Welle.

Es ist eine Aufgabe der vorliegenden Erfindung, ein stufenlos verstellbares Fahrzeugrollo zu schaffen, welches eine kompakte Bauform aufweist und welches mit einer geringen Antriebskraft bedienbar ist.

Diese Aufgabe wird gelöst durch ein stufenlos verstellbares Fahrzeugrollo, insbesondere zur Abdeckung einer Fahrzeugfensteröffnung, umfassend eine erste Wickelwelle, eine auf der ersten Wickelwelle auf- und abwickelbar angebrachte Rollobahn, ein am freien Ende der Rollobahn angreifendes flexibles Kraftübertragungsmittel, das gegensinnig zur Auf- bzw. Abwickelrichtung der Rollobahn von einer zweiten Wickelwelle abgewickelt bzw. auf diese aufgewickelt wird, wobei die zweite Wickelwelle zumindest abschnittsweise konisch gestaltet ist und die zweite Wickelwelle bei einer Rotation um ihre Drehachse in Axialrichtung der Drehachse verschiebbar ist, so dass ein Wickeldurchmesser des Kraftübertragungsmittels an der zweiten Wickelwelle beim Abwickeln der Rollobahn von der Wickelwelle abnimmt.

Als Wickeldurchmesser wird dabei ein Durchmesser bezeichnet, mit welchem die Rollobahn die erste Wickelwellen bzw. das Kraftübertragungsmittel die zweite Wickelwelle umschlingt. Aufgrund der Verschiebung der zweiten Wickelwelle liegt eine Umschlingung dabei in Verschieberichtung nicht in einer Ebene.

Durch Verwendung eines Zugseils, eines Bowdenzugs, einer Drahtlitze, einer Zahnschnur oder dergleichen als Kraftübertragungsmittel ist eine kontinuierliche Abwicklung bzw. Aufwicklung möglich. Als Zahnschnur wird dabei ein Kraftübertragungsmittel mit einer biegeelastischen Seele und einem um die Seele gewundenen Wendel bezeichnet, wobei durch die Zahnschnur sowohl Zug- als auch Druckkräfte übertragbar sind.

Die beiden Wickelwellen, die Rollobahn und das Kraftübertragungsmittel bilden vorzugsweise ein System, welches sich ohne äußere Krafteinwirkung im Gleichgewicht befindet. Durch geeignete Synchronisationsmittel und/oder eine Anordnung an zumindest teilweise gemeinsamen Bauteilen ist beim Abwickeln bzw. Aufwickeln der Rollobahn von der ersten Wickelwelle die Bewegung der zweiten Wickelwelle mit der Bewegung der ersten Wickelwelle synchronisiert. Dabei tritt das Problem auf, dass bei einer angenommenen konstanten Abwickelgeschwindigkeit der Rollobahn eine Drehbewegung der ersten Wickelwelle aufgrund des abnehmenden Wickeldurchmessers der Rollobahn an der ersten Wickelwelle steigt. Erfindungsgemäß wird dabei das Kraftübertragungsmittel an der zweiten Wickelwelle aufgewickelt. Insbesondere wenn die Bewegung der zweiten Wickelwelle mit der Bewegung der ersten Wickelwelle synchronisiert ist, steigt auch eine Drehgeschwindigkeit der zweiten Wickelwelle mit abnehmendem Wickeldurchmesser der Rollobahn an der ersten Wickelwelle. Durch die erfindungsgemäße konische Gestaltung der zweiten Wickelwelle und ein Verschieben der Wickelwelle in Axialrichtung der Drehachse wird bewirkt, dass ein Wickeldurchmesser des Kraftübertragungsmittels an der zweiten Wickelwelle beim Abwickeln der Rollobahn von der Wickelwelle ebenfalls abnimmt. Aufgrund ihrer Verschiebbarkeit und ihrer Form wird die zweite Wickelwelle auch als Wanderspiralkegel bezeichnet.

In einer vorteilhaften Ausgestaltung der Erfindung weist die zweite Wickelwelle zumindest abschnittsweise ein Gewinde, vorzugsweise ein Außengewinde, auf. Durch ein Gewinde wird auf einfache Weise eine Verstellung in Axialrichtung bei einer Rotation bewirkt. Das Gewinde der Wickelwelle wirkt mit einem feststehenden Gewinde zusammen, welches beispielsweise an einer Fensterbrüstung, der Fahrzeugkarosserie und/oder in einem das Fahrzeugrollo zumindest teilweise aufnehmenden Gehäuse vorgesehen ist.

In einer weiteren Ausgestaltung der Erfindung sind die erste Wickelwelle und die zweite Wickelwelle koaxial angeordnet. Durch eine entsprechende Anordnung ist eine besonders platzsparende Bauweise möglich, wobei die Wickelwellen in einem gemeinsamen Gehäuse oder dergleichen gelagert werden können.

In einer Weiterbildung der Erfindung ist eine Umlenkeinrichtung vorgesehen, wobei das Kraftübertragungsmittel durch eine Umlenkeinrichtung in Richtung der zweiten Wickelwelle umgelenkt ist. Das Kraftübertragungsmittel ist beispielsweise als Zugseil oder Bowdenzug besonders kostengünstig ausgebildet. Durch die Umlenkeinrichtung ist es dabei möglich, die Wellen koaxial anzuordnen.

In einer weiteren Ausgestaltung der Erfindung umfasst eine Antriebsvorrichtung des Fahrzeugrollos einen Federmotor, wobei der Federmotor mindestens ein Federelement aufweist, die Rollobahn entgegen einer Rückstellkraft des Federelements von der Wickelwelle abziehbar ist und die Rollobahn durch die Rückstellkraft des Federelements auf die Wickelwelle aufwickelbar ist. Durch einen entsprechenden Federmotor ist ein (semi-)automatisches Ab- und/oder Aufwickeln und/oder eine Unterstützung eines Nutzers beim Ab- und/oder Aufwickeln möglich.

In einer Weiterbildung der Erfindung weist der Federmotor eine relativ zu der Wickelwelle verdrehbar gelagerte Federwelle auf, wobei das Federelement zwischen der Federwelle und der Wickelwelle angeordnet ist. Dadurch ist es möglich, dass eine Kraft zum Abwickeln der Rollobahn unabhängig von einer Größe der bereits abgewickelten Fläche konstant bleibt. Ein entsprechendes System kann somit ohne einwirkende äußere Kräfte auf einfache Weise im Gleichgewicht gehalten werden.

In einer weiteren Ausgestaltung der Erfindung ist eine Drehbewegung der Federwelle und/oder der ersten Wickelwelle mit einer Drehbewegung der zweiten Wickelwelle mittels eines Mitnehmers oder dergleichen synchronisiert. Die Drehbewegung der ersten Wickelwelle kann dabei der Drehbewegung der Federwelle beim Abwickeln der Rollobahn leicht vorauseilen, bzw. beim Aufwickeln der Rollobahn leicht nacheilen. Eine Bewegung der Wickelwellen bleibt jedoch im Wesentlichen synchronisiert im Sinne der Erfindung.

In einer weiteren Ausgestaltung der Erfindung weist das Kraftübertragungsmittel eine Vorspannung auf, wobei ein Durchmesser und/oder ein Öffnungswinkel der Konusform der zweiten Wickelwelle derart gewählt ist, dass die Vorspannung des Kraftübertragungsmittels beim Auf- und Abwickeln der Rollobahn im Wesentlichen konstant bleibt. Der Öffnungswinkel der Konusform ist dabei auch auf eine Steigung des Gewindes der zweiten Wickelwelle abgestimmt.

In einer weiteren Ausgestaltung der Erfindung sind die Federwelle und/oder die zweite Wickelwelle mittels eines Antriebsmotors, insbesondere eines Elektromotors antreibbar. Der Antriebsmotor ist beispielsweise über ein Getriebe mit der Federwelle und/oder der Wickelwelle gekoppelt. In anderen Ausgestaltungen erfolgt ein Abwickeln und/oder ein Aufwickeln manuell, wobei der Nutzer durch den Federmotor unterstützt wird.

In einer weiteren Ausgestaltung der Erfindung ist das Kraftübertragungsmittel mittels eines unter Reibung geführten Gleitelements an der Rollobahn angebracht. Das Gleitelement ist beispielsweise in einer Führungsschiene geführt, wobei je nach Wahl der Materialien für Führungsschiene und Gleitelement eine gute Selbsthemmung in der Schiene erzielbar ist. Dabei ist es weiter denkbar, dass an dem Gleitelement beispielsweise ein durch ein Zwangsmittel, wie eine Feder, verrastbarer Stopper vorgesehen ist, wobei der Stopper zum Verschieben des Gleitelements gelöst wird. Das Gleitelement kann mit einem Spiegel oder dergleichen zum Verteilen einer Eingriffskraft über die Breite der Rollobahn einteilig ausgebildet sein.

In einer vorteilhaften Ausgestaltung ist die Wickelwelle im Wesentlichen parallel zu einer Seitenkante einer Fensteröffnung angeordnet. Das Fahrzeugrollo ist dabei als Fahrzeugfensterrollo zur Abdeckung eines Seitenfensters gestaltet.

In einer vorteilhaften Ausgestaltung ist die Rollobahn zur Abdeckung eines Teilabschnitts eines Seitenfensters ausgebildet. Das Fahrzeugrollo ist beispielsweise an einer Fronttür eines Fahrzeugs angeordnet, wobei durch die nur teilweise Abdeckung der Fensteröffnung ein sicherer Fahrbetrieb gewährleistet bleibt. Um einen Fahrer möglichst wenig Abzulenken, ist eine einfache Bedienbarkeit des Fahrzeugrollos besonders vorteilhaft.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

### In den Figuren zeigen:

- Fig.1:: eine schematische Darstellung eines Ausschnitts einer Fahrzeug-Fahrertür mit einem Fahrzeugrollo;
- Fig. 2:: eine schematische Darstellung eines Fahrzeugrollos gemäß einer ersten Ausführungsform in einer Seifenansicht und
- Fig. 3:: eine schematische Darstellung eines Fahrzeugrollos gemäß einer zweiten Ausführungsform in einer Seifenansicht.

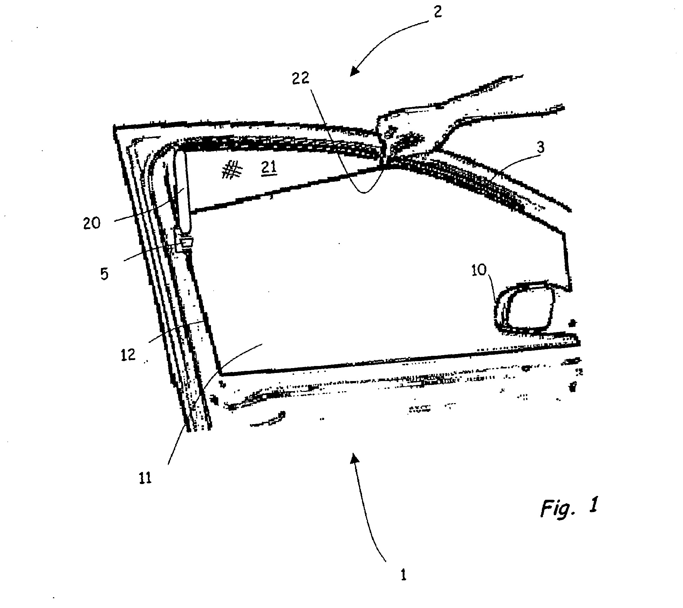

Figur 1 zeigt schematisch einen Ausschnitt einer Fahrzeug-Fahrertür 1 mit einem Fahrzeugrollo 2. An der Fahrzeug-Fahrertür 1 ist ein Seitenspiegel 10 angeordnet.

Das Fahrzeugrollo 2 dient zur teilweisen Abdeckung einer Fensteröffnung 11, wobei nur ein oberer Bereich der Fensteröffnung 11 verdeckt wird, um so ein Eindringen von Sonnenstrahlen zu verhindern, ohne dass ein Blick eines Fahrers durch die Fensteröffnung 11, beispielsweise auf den Seitenspiegel 10 verhindert wird.

Das Fahrzeugrollo 2 umfasst eine Wickelwelle 20, welche im Wesentlichen parallel zu einer Seitenkante 12 der Fensteröffnung 11 angeordnet ist. Auf der Wickelwelle 20 ist eine Rollobahn 21 auf- und abwickelbar angeordnet. Die Rollobahn 21 ist ein flexibles Flächengebilde, beispielsweise ein Gewebe, Gewirke, ein Vlies, eine Folienbahn oder dergleichen. An dem freien Ende der Rollobahn 21 ist ein Gleitstein 22 angebracht, welcher in eine Führungsschiene 3 verschieblich eingesetzt ist. Das dargestellte Fahrzeugrolle 2 ist manuell bedienbar, wobei zu diesem Zweck durch einen Nutzer der Gleitstein 22 innerhalb der Führungsschiene 3 verschoben wird. Ein Abwickeln erfolgt beispielsweise entgegen der Kraft eines der Wickelwelle 20 zugeordneten Federelements (nicht dargestellt in Fig. 1). Um die Rollobahn 21 in einer gewünschten Position zu halten, umfasst das Fahrzeugrollo 2 erfindungsgemäß ein in Fig. 1 nicht sichtbares, an dem Gleitstein 22 angeordnetes Kraftübertragungsmittel und eine zweite Wickelwelle 5, wobei das Kraftübertragungsmittel beim Abwickeln der Rollobahn 21 von der ersten Wickelwelle 20 auf die zweite Wickelwelle aufgewickelt wird, und umgekehrt das Kraftübertragungsmittel beim Aufwickeln der Rollobahn 21 auf die erste Wickelwelle 20 von der zweiten Wickelwelle 5 abgewickelt wird.

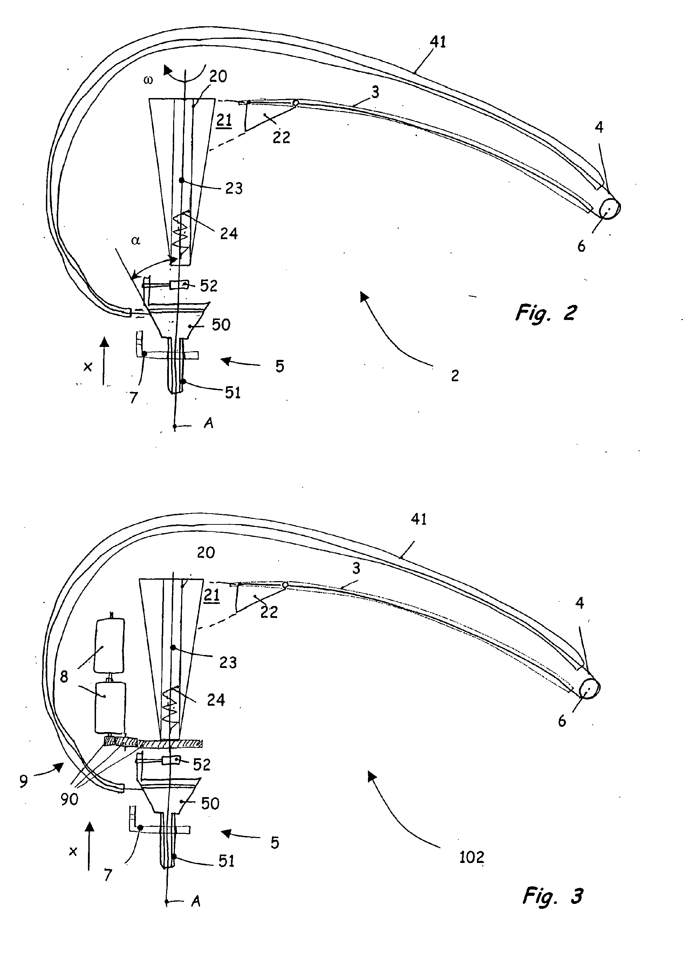

Fig. 2 zeigt das Fahrzeugrollo 2 gemäß Fig. 1 in einer schematischen Darstellung ohne die Fahrzeugtüre 1 gemäß Fig. 1. Wie in Fig. 2 erkennbar, ist über den Gleitstein 22 ein Zugseil 4 mit der Rollobahn 21 verbunden, welches beim Abwickeln der Rollobahn 21 von der Wickelwelle 20 auf die zweite Wickelwelle 5 aufgewickelt wird. Die Wickelwelle 5 ist in dem dargestellten Ausführungsbeispiel koaxial zu der ersten Wickelwelle 20 angeordnet. Das Zugseil 4 ist zu diesem Zweck über eine als Umlenkrolle 6 gestaltete Umlenkeinrichtung geführt, wobei in dem dargestellten Ausführungsbeispiel eine Umlenkung derart erfolgt, dass das Zugseil 4 im Wesentlichen parallel zu einer Oberkante der Fensteröffnung 11 gemäß Fig. 1 geführt wird. Das Zugseil 4 ist zumindest abschnittsweise als Bowdenzug gestaltet, wobei das Zugseil 4 mit einer flexiblen, aber zumindest in Zugrichtung druckfesten Hülle 41 ausgebildet ist.

Die zweite Wickelwelle 5 ist erfindungsgemäß als so genannter Wanderspiralkegel ausgebildet, wobei die Wickelwelle 5 einen konusförmigen Abschnitt 50 mit einem Öffnungswinkel α der Konusform und einen Abschnitt 51 mit einem Schraubengewinde 51 aufweist. Die Wickelwelle 5 ist über das Schraubengewinde 51 in einem schematisch dargestellten Gehäuse 7 gelagert. Beim Drehen der zweiten Wickelwelle 5 um eine Achse A wird aufgrund des Schraubengewindes 51 die Wickelwelle 5 in Achsrichtung der Drehachse A verschoben. Dadurch wird ein Wickeldurchmesser des Zugseils 4 auf der zweiten Wickelwelle 5 beim Auf- bzw. Abwickeln der Rollobahn 21 variiert.

Das Fahrzeugrollo 2 umfasst weiter einen Federmotor mit einer Federwelle 23 und einem Federelement 24, wobei die Wickelwelle 20 und die Federwelle 23 relativ zueinander verdrehbar sind. Über das Federelement 24 sind die Wickelwelle 20 und die Federwelle 23 gekoppelt. Bei Bewegen des Gleitsteins 22 zum Abwickeln der Rollobahn 21 von der Wickelwelle 20 wird somit zunächst die Wickelwelle 20 in eine Rotation versetzt. In dem dargestellten Ausführungsbeispiel erfolgt eine Rotation in Uhrzeigerrichtung, wie schematisch durch einen Pfeil ω angedeutet. Die Federwelle 23 ist in dem dargestellten Ausführungsbeispiel drehbar gelagert. Durch die Kopplung mit dem Federelement 24 wird daher auch die Federwelle 23 in Rotation versetzt.

An der Federstange 23 ist ein Mitnehmer 52 drehfest angeordnet, durch welchen eine Rotation der Federstange 23 auf die zweite Wickelwelle 5 übertragbar ist. Die Drehbewegung der Federwelle 23 wird somit über den Mitnehmer 52 auf die zweite Wickelwelle 5 übertragen und das Zugseil 4 wird entsprechend auf die Wickelwelle 5 aufgewickelt. Die Wickelwelle 5 ist dabei so angeordnet, dass das Zugseil 4 auf den konischen Abschnitt 50 der Wickelwelle 5 aufgewickelt wird.

Aufgrund des Schraubengewindes 51 wird mit der Drehbewegung der zweiten Wickelwelle 5 ein Verschieben der zweiten Wickelwelle 5 in Axialrichtung A bewirkt. Dabei erfolgt ein Verschieben derart, dass beim Abwickeln der Rollobahn 21 von der ersten Wickelwelle 20 ein Wickeldurchmesser für das Kraftübertragungsmittel 4 an der zweiten Wickelwelle 5 abnimmt. In anderen Worten wird in dem dargestellten Ausführungsbeispiel die zweite Wickelwelle 5 beim Abwickeln der Rollobahn 21 von der ersten Wickelwelle 20 nach oben verschoben, wie durch einen Pfeil x angedeutet. Ein Durchmesser des konusförmigen Abschnitts 50 sowie ein zugehöriger Öffnungswinkel α sind dabei derart ausgelegt, dass beim Auf- und Abwickeln der Rollobahn 21 von der ersten Wickelwelle 20 eine Vorspannung des Systems umfassend die Rollobahn 21, das Zugseil 4 und das Federelement 24 im Wesentlichen unverändert bleibt. Dadurch ist das Fahrzeugrollo 2 unabhängig von einer Position der Rollobahn 21 im Wesentlichen im Gleichgewicht. Zum Abwickeln bzw. Aufwickeln der Rollobahn 21 auf die Wickelwelle 20 sind daher nur geringe Kräfte aufzubringen. Diese Kräfte werden beispielsweise auf einfache Weise durch Verschieben des Gleitsteins 22 aufgebracht. Der Gleitstein 22 ist dabei in einer Führungsschiene 3 geführt, wobei durch geeignete Reibparameter zwischen Gleitstein 22 und Führungsschiene 3 eine Selbsthemmung des Systems verbessert werden kann. Die Reibung zwischen Gleitstein 22 und Führungsschiene 3 muss zum Verschieben überwunden werden. Vorzugsweise sind daher Materialienpaare zu wählen, welche einen hohen Haftreibwert, jedoch nur einen geringen Gleitreibwert aufweisen.

Fig. 3 zeigt eine weitere Ausführungsform eines erfindungsgemäßen Fahrzeugrollos 102. Das Fahrzeugrollo 102 entspricht im Wesentlichen dem Fahrzeugrollo 2 gemäß Fig. 2 und für gleiche Bauteile werden einheitliche Bezugszeichen verwendet. Auf eine detaillierte Beschreibung dieser Bauteile wird verzichtet. Im Unterschied zu der Ausführungsform gemäß Fig. 2 ist bei dem Fahrzeugrollo 102 gemäß Fig. 3 ein motorischer Antrieb zum Abwickeln bzw. Aufwickeln der Rollobahn 21 von der ersten bzw. auf die erste Wickelwelle 20 vorgesehen. In dem dargestellten Ausführungsbeispiel sind zu diesem Zweck zwei koaxial angeordnete Elektromotoren 8 vorgesehen, welche zusammenwirkend betreibbar sind. Die Motoren 8 sind über ein Getriebe 9, umfassend in dem dargestellten Ausführungsbeispiel drei Zahnräder 90, mit der Federwelle 23 wirkverbunden. Die Motoren 8 können jeweils mit sehr geringer Leistung, beispielsweise mit einer Leistung von vier Watt oder weniger ausgelegt werden. Die Zahnräder 90 sind derart ausgelegt, dass eine optimale Drehgeschwindigkeit der Federwelle 23 und damit der Wickelwelle 20 erreicht wird.

## Patentansprüche

1. Fahrzeugrollo, insbesondere zur Abdeckung einer Fahrzeugfensteröffnung (11), umfassend eine erste Wickelwelle (20), eine auf der ersten Wickelwelle (20) auf- und abwickelbar angebrachte Rollobahn (21), ein am freien Ende der Rollobahn (21) angreifendes flexibles Kraftübertragungsmittel (4), das gegensinnig zur Auf- bzw. Abwickelrichtung der Rollobahn (20) von einer zweiten Wickelwelle (5) abgewickelt bzw. auf diese aufgewickelt wird, **dadurch gekennzeichnet, dass** die zweite Wickelwelle (5) zumindest abschnittsweise konisch gestaltet ist und die zweite Wickelwelle (5) verschieblich gelagert ist, wobei die zweite Wickelwelle (5) bei einer Rotation um ihre Drehachse (A) in Axialrichtung der Drehachse (A) verschiebbar ist, so dass ein Wickeldurchmesser des Kraftübertragungsmittels (4) an der zweiten Wickelwelle (5) beim Abwickeln der Rollobahn (21) von der ersten Wickelwelle (20) abnimmt.

2. Fahrzeugrollo nach Anspruch 1, **dadurch gekennzeichnet, dass** die zweite Wickelwelle (5) zumindest in einem Bereich (51) des Außenumfangs ein Gewinde, insbesondere ein Außengewinde, aufweist.

3. Fahrzeugrollo nach einem der Ansprüche 1 oder 2, **dadurch gekennzeichnet, dass** die erste Wickelwelle (20) und die zweite Wickelwelle (5) koaxial angeordnet sind.

4. Fahrzeugrollo nach Anspruch 3, **dadurch gekennzeichnet, dass** das Kraftübertragungsmittel (4) durch eine Umlenkeinrichtung (6) in Richtung der zweiten Wickelwelle (5) umgelenkt ist.

5. Fahrzeugrollo nach einem der Ansprüche 1 bis 4, **dadurch gekennzeichnet, dass** eine Antriebsvorrichtung des Fahrzeugrollos (2, 102) einen Federmotor umfasst, wobei der Federmotor mindestens ein Federelement (24) aufweist, die Rollobahn (21) entgegen einer Rückstellkraft des Federelements (23) von der ersten Wickelwelle (20) abziehbar ist und die Rollobahn (21) durch die Rückstellkraft des Federelements (23) auf die erste Wickelwelle (20) aufwickelbar ist.

6. Fahrzeugrollo nach Anspruch 5, **dadurch gekennzeichnet, dass** der Federmotor eine relativ zu der Wickelwelle (20) verdrehbar gelagerte Federwelle (23) aufweist, wobei das Federelement (24) zwischen der Federwelle (23) und der Wickelwelle (20) angeordnet ist.

7. Fahrzeugrollo nach Anspruch 5 oder 6, **dadurch gekennzeichnet, dass** an der Federwelle (23) und/oder an der ersten Wickelwelle (20) ein Mitnehmer (52) drehfest angeordnet ist, durch welchen eine Drehbewegung der Federwelle (23) bzw. der ersten Wickelwelle (20) mit einer Drehbewegung der zweiten Wickelwelle (5) synchronisiert ist.

8. Fahrzeugrollo nach einem der vorangegangenen Ansprüche, **dadurch gekennzeichnet, dass** das Kraftübertragungsmittel (4) eine Vorspannung aufweist und eine Größe und/oder ein Öffnungswinkel (α) der Konusform der zweiten Wickelwelle (5) derart gewählt sind, dass die Vorspannung des Kraftübertragungsmittels (4) beim Auf- und/oder Abwickeln der Rollobahn (21) im Wesentlichen konstant bleibt.

9. Fahrzeugrollo nach einem der vorangegangenen Ansprüche, **dadurch gekennzeichnet, dass** die Federwelle (23) und/oder die zweite Wickelwelle (20) mittels eines Antriebsmotors, insbesondere eines Elektromotors (8) antreibbar sind.

10. Fahrzeugrollo nach einem der vorangegangenen Ansprüche, **dadurch gekennzeichnet, dass** das Kraftübertragungsmittel (4) mittels eines unter Reibung geführten Gleitelements (22) an der Rollobahn (21) angebracht ist.

11. Fahrzeugrollo nach einem der vorangegangenen Ansprüche, **dadurch gekennzeichnet, dass** die erste Wickelwelle (20) im Wesentlichen parallel zu einer Seitenkante (12) einer Fensteröffnung (11) angeordnet ist.

12. Fahrzeugrollo nach Anspruch 11, **dadurch gekennzeichnet, dass** die Rollobahn (21) zur Abdeckung eines Teilabschnitts eines Seitenfensters ausgebildet ist.
